# EUROPÄISCHE PATENTANMELDUNG

(11) **EP 1 600 681 A1**
(43) Veröffentlichungstag der Anmeldung: **30.11.2005**
(21) Anmeldenummer: 04291320.2
(22) Anmeldetag: 25.05.2004
(51) Int. Cl.: F16L 27/107, F16L 51/02

(54) **Vorrichtung zum fluiddichten Verbinden zweier fluidführender Leitungen**

(71) Anmelder: Woco AVS S.A.S., 58302 Decize Cedex (FR)
(72) Erfinder: Roux, Claude, 58300 Decize (FR); Cousineau, Alban, 58300 Decize (FR); Voisin, Didier, 71140 Vitry sur Loire (FR)
(74) Vertreter: Weber-Bruls, Dorothée

(57) **Zusammenfassung**

Bei einer Vorrichtung (1) zum fluiddichten Verbinden zweier fluidführender Leitungen, umfassend ein flexibles Verbindungsstück (3) mit wenigstens einem insbesondere bei einem auf das Verbindungsstück wirkenden Fluidbetriebsdruck gegenüber einer der Leitungen selbstdichtenden Dichtungsabschnitt (7), ist wenigstens eine Halteeinrichtung vorgesehen, die an einer der Leitungen fest montierbar ist und zumindest im montierten, fluidbetriebsdruckfreien Zustand den Dichtungsabschnitt lose oder beweglich an der einen Leitung hält.

## Beschreibung

Die Erfindung betrifft eine Vorrichtung zum fluiddichten Verbinden zweier fluidführender Leitungen, insbesondere eine Kompensationsmuffe oder schwingungsentkoppelnde Muffe, die als eine flexible Verbindungsstelle zwischen zwei miteinander zu verbindenden Leitungen fungiert.

Derartige Vorrichtungen umfassen ein flexibles Verbindungsstück, das häufig aus Gummi gebildet ist, was der Vorrichtung die gewünschte Flexibilität am Verbindungsbereich der beiden Leitungen verleiht. Die Flexibilität erleichtert nicht nur die Montage beim fluiddichten Verbinden der Leitungen, sondern lässt auch eine Verlagerung der Leitungen relativ zueinander bei verschiedenen Betriebszuständen, wie unterschiedlichen Temperaturen oder Schwingungsbelastungen, zu. Allerdings fordert die flexible Verbindung eine erhöhte Aufmerksamkeit bei der Abdichtung, die an den Leitungsenden notwendig ist.

Eine flexible Vorrichtung zum fluiddichten Verbinden zweier fluidführender Leitungen ist aus der FR 2776359 B1 bekannt, durch die zwei Rohrleitungen zu verbinden sind, deren Außenfläche glatt und gewindefrei ist. Beim Koppeln der Leitungen wird ein Montageabstand zwischen den Enden der Rohrleitungen über ein flexibles Verbindungsstück überbrückt, das an dessen beiden Enden einen rechteckigen oder trapezförmigen Dichtungsabschnitt aufweist. Zum Befestigen des flexiblen Verbindungsstücks an den Rohrleitungen ist eine Rohrschelle vorgesehen, die zwei Innenausnehmungen aufweist. In einer Innenausnehmung sitzt der Dichtungsabschnitt, der durch die Montagekräfte der Rohrschelle gegen die Leitung gedrückt wird, und in der anderen eine ringförmige Kralle, die sich bei Festziehen der Schelle um die jeweilige Rohrleitung in das Material der Rohrleitung einkrallt, um die Rohrschelle samt Dichtungsabschnitt an den Leitungen axial festzusetzen.

Es stellte sich bei dieser Vorrichtung zum fluiddichten Verbinden eine Schwierigkeit dahingehend heraus, dass die Abmessung der Innenausnehmungen und des Dichtungsabschnitts mit sehr kleinen Toleranzmaßen versehen sein müssen, damit sichergestellt ist, dass ein Teil der Montagekräfte der Rohrschelle in die Kralle und der andere Teil der Montagekräfte in den Dichtungsabschnitt eingeleitet werden. Die Verteilung der Montagekraft muss derart abgestimmt sein, dass die Montagekraft einerseits ausreichend groß ist, um die Kralle in das Material der Leitung eindringen zu lassen. Sollte ein zu großer Teil der Montagekraft der Rohrschelle zum Umformen des Dichtungsabschnittes verbraucht werden, weil entweder letztere zu groß oder die Innenausnehmung für den Dichtungsabschnitt zu klein dimensioniert ist oder umgekehrt, kann es durch axiales Abrutschen der Rohrschelle von der Leitung bei hohen Fluiddrücken zum Versagen der Vorrichtung zum fluiddichten Verbinden kommen. Andererseits soll die Montagekraft der Rohrschelle dazu ausreichen, dem Dichtungsabschnitt oder den der Außenseite der jeweiligen Rohrleitung zugewandten Dichtungslippen des Dichtungsabschnitts einen ausreichend großen Anpressdruck zu verleihen, um Dichtungskräfte hervorzurufen. Schließlich weist die Rohrschelle wegen Ihrer Zweiteiligkeit Umfangsunterbrechungen auf, die eine unstetige Umfangsdichtfläche verursacht, an der ein Fluidleck auftreten kann.

Es ist Aufgabe der Erfindung, die Nachteile des Standes der Technik zu beseitigen, insbesondere die bekannte Vorrichtung zum fluiddichten Verbinden zweier fluidführender Leitungen derart zu verbessern, dass der Aufwand für die Herstellung der Vorrichtung reduziert und Montierbarkeit der Vorrichtung an den fluidführenden Leitungen bei Gewährleistung einer ausreichenden Dichtungsfunktion erleichtert ist.

Diese Aufgabe löst Anspruch 1.

Danach ist eine Vorrichtung zum fluiddichten Verbinden zweier fluidführender Leitungen mit wenigstens einer Halteeinrichtung versehen, die selbst an eine der Leitungen fest montierbar ist, wobei zumindest in montiertem, fluidbetriebsdruckfreiem Zustand der Dichtungsabschnitt des Verbindungsstücks im wesentlichen lose oder beweglich an der einen Leitung gehalten ist. Unter montiertem, fluidbetriebsdruckfreiem Zustand ist das Ende der Montage zu verstehen, wobei noch keine oder nur geringfügige Druckdifferenzen zwischen der Außen- und Innenseite des flexiblen Verbindungsstücks herrschen. Die Beweglichkeit des Dichtungsabschnitts nimmt umso stärker ab, desto höher der betriebliche Fluidinnendruck ist, der von Innen auf das Verbindungsstück wirkt.

Die erfindungsgemäße Maßnahme hat den Vorteil, dass bei Dimensionierung und Montage der Halteeinrichtung keine Kraftabstimmung zwischen Dichtungsfunktion und Befestigung notwendig ist. Sämtliche Montagekräfte können zum Befestigen der Vorrichtung an die Leitungen genutzt werden. Dem den Dichtungsabschnitt haltenden Bereich der Vorrichtung kann eine sehr großzügige Toleranzspanne zugesprochen werden, um die lose Lagerung des Dichtungsabschnitts realisierbar zu machen.

Bei Erhöhung des auf das flexible Verbindungsstück wirkenden Innendrucks wird der Dichtungsabschnitt derart belastet, dass die Verbindung mit der jeweiligen Leitung auch für hohe Innendrücke dicht ist. Überraschenderweise stellte sich heraus, dass auch das lose oder bewegliche Halten des Dichtungsabschnitts an der Leitung durch die Halteeinrichtung dazu ausreicht, Flüssigkeiten oder Gase am Austreten an der durch die Vorrichtung zum fluiddichten Verbinden geschaffenen Verbindungsstelle zu hindern, welche Wirkung einen labyrinthartigen Übergangsbereich zwischen Dichtungsabschnitt und Halteeinrichtung verstärken kann.

Bei einer bevorzugten Weiterbildung der Erfindung ist die Halteeinrichtung derart ausgelegt, dass der Dichtungsabschnitt in einer Vorzugsrichtung beweglich gehalten ist, die im wesentlichen parallel zur Längserstreckung der Leitung ist. Bei Innendruckbelastung auf das Verbindungsstück wird auf den Dichtungsabschnitt eine Zugkraft in dieser Vorzugsrichtung ausgeübt.

Erfindungsgemäß kann der Dichtungsabschnitt eine Dichtfläche und eine gegenüber der Dichtfläche geneigte Anlagefläche aufweisen, was im Betrieb zu einer stetigen Zunahme der Verkeilkräfte um den Dichtungsabschnitt führt. Vorzugsweise ist ein spitzer Winkel zwischen der Anlagefläche und der Dichtfläche in einem Bereich von 10° bis 60°, vorzugsweise zwischen 15° und 45°, und insbesondere bei 36°, festgelegt. Durch die Anlagefläche, die also auch schräg zur Vorzugsrichtung liegt und entweder mit einem Anschlag der Halteeinrichtung oder mit der Leitung in Eingriff kommen kann, wird erreicht, dass die auf den Dichtungsabschnitt während eines Fluidtransports durch die Leitungen oder wegen des Fluiddrucks ausgeübten Zugkräfte zumindest zu einem großen Teil in auf die Dichtfläche wirkende Normalkräfte umgelenkt werden, welche eine zuverlässige Dichtungsfunktion an dem Dichtungsabschnitt gewährleisten. Mit zunehmendem Innendruck nimmt zwar die Gefahr eines Fluidlecks zu, die aber mit gleichzeitigem Zunehmen der auf die Dichtfläche wirkenden Normalkräfte beseitigt wird. Vorzugsweise ist die Anlagefläche und die Dichtfläche längs ihres Umgangs stetig und unterbrechungsfrei.

Vorzugsweise ist der Anschlag ein in sich geschlossener ringförmiger Gegenstand, der entweder einstückig mit der Halteeinrichtung oder mit der jeweiligen Leitung ausgebildet ist oder als separates Bauteil zwischen dem Dichtungsabschnitt und der Halteeinrichtung angeordnet ist. Unter ringförmig ist jede beliebige Form, beispielsweise eine kreisförmig, oval, rechtförmige Form, zu verstehen, die in sich unterbrechungsfrei, geschlossen endlos ist. Das separate Zwischenteil oder Zwischenringteil umgibt endlos den Dichtungsabschnitt. Bei einer bevorzugten Ausführung des Zwischenteils ist ein kreisförmiger Ring vorgesehen. Auf diese Weise können zweiteilige Befestigungsschellen verwendet werden, um dennoch eine ununterbrochen umlaufende Dichtfläche für eine fluiddichte Verbindung zwischen den Leitungen zu schaffen, die auch dann besteht, wenn kleine oder keine Druckunterschiede an dem flexiblen Verbindungsstück vorliegen.

Um eine besonders wirksame Umwandlung der Zugkräfte in auf die Dichtfläche wirkende Normalkräfte zu gewährleisten, ist das Zwischenteil mit einer Seite versehen, die formkomplementär zur Anlagefläche ausgebildet ist.

Um die erfindungsgemäße einfache Montage und Herstellbarkeit der erfindungsgemäßen Vorrichtung sicherstellende Vorteile zu erreichen, ist das Zwischenteil im montierten Zustand der Halteeinrichtung lose beweglich benachbart dem Dichtungsabschnitt gehalten.

Bei einer bevorzugten Weiterbildung der Erfindung ist der Dichtungsabschnitt in Form eines im Querschnitt rechtwinkligen Dreiecks ausgebildet, wobei die Hypotenusen-Seite die Anlagefläche bildet. Vorteilhafterweise ist der Dichtungsabschnitt derart an die Leitung lose zu montieren, dass eine der beiden senkrecht zueinander stehenden Kathetenseiten zur Bildung der Dichtfläche parallel, die andere senkrecht zur Leitung liegt.

Eine besonders vorteilhafte Ausgestaltung des Dichtungsabschnitts ist mit einem mehrschichtigen Aufbau realisiert, bei dem ein weicher Kern aus Gummi erhöhter Härte von einer netzartigen Verstärkung, insbesondere einer Karkasse, umgeben ist. Die Karkasse wirkt als Verstärkung des Gummikerns, wobei zur Bildung guter Umlenkeigenschaften von auf den Dichtungsabschnitt wirkenden Zugkräften in eine Radialrichtung und zur Bildung einer besonders zuverlässigen Dichtungsfläche die Karkasse von einem Mantel aus elastischem Material, insbesondere Gummi, umgeben ist, wobei insbesondere zumindest der Gummi an der Reibungsfläche, die kontinuierlich an die Innenseite des flexiblen Verbindungsstücks anschließt, weicher als der des Gummikerns ist. Die Weichheit des Gummikerns gewährleistet den Ausgleich von konstruktiven Ungenauigkeiten an den Leitungen, wie Unrundungen oder Maßtoleranzen, und damit eine stetige Dichtungsgrenzfläche.

Weitere Vorteile, Eigenschaften und Merkmale der Erfindung werden durch die Beschreibung einer bevorzugten Ausführung anhand der beiliegenden Zeichnungen deutlich, in denen zeigcn:
- Figur 1: eine perspektivische Ansicht einer teilweise freigeschnittenen erfindungsgemäßen Vorrichtung zum fluiddichten Verbinden zweier fluidführender Leitungen, die nicht näher dargestellt sind;
- Figur 2: eine perspektivische Freischnittansicht der erfindungsgemäßen Vorrichtung gemäß Figur 1, die an zwei einander gegenüberliegenden Rohrleitungen montiert ist;
- Figur 3: eine Seitenansicht der an Rohrleitungen montierten erfindungsgemäßen Vorrichtung gemäß den Figuren 1 und 2;
- Figur 4: eine Querschnittsansicht der erfindungsgemäßen Vorrichtung entlang der Schnittlinie IV-IV gemäß Figur 3.

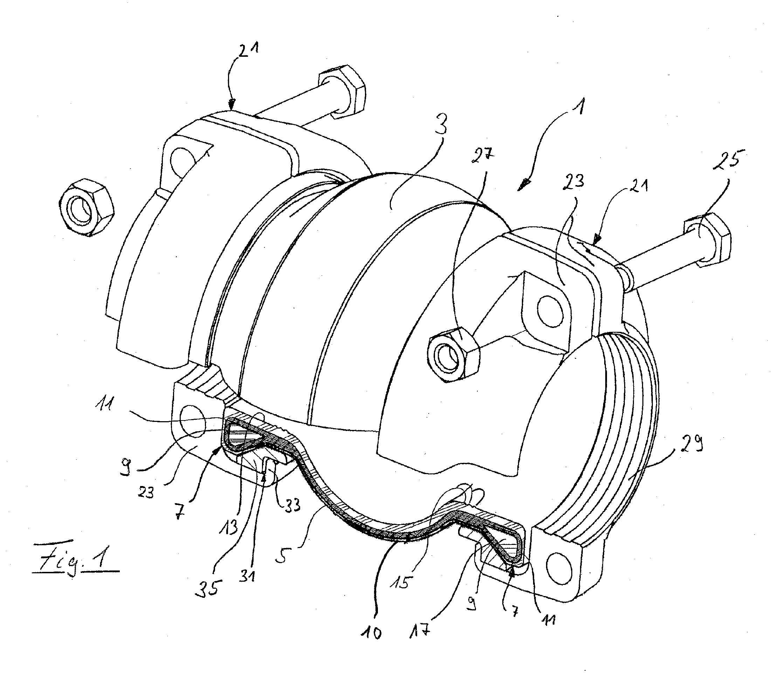

Figur 1 zeigt eine erfindungsgemäße Vorrichtung 1 zum fluiddichten Verbinden zweier nicht näher dargestellter fluidführender Leitungen. Die Vorrichtung 1 umfasst ein flexibles Verbindungsstück 3, das eine in Gummi eingebettete Karkasse 5 umfasst. Das Verbindungsstück 3 ist hauptsächlich aus einem in unbelastetem und belastetem Zustand konvex geformten Mittelbereich gebildet, an den jeweils beidseitig ein keilförmiger Dichtungsabschnitt 7 anschließt, der einstückig mit dem Mittelbereich ausgebildet ist.

Der Dichtungsabschnitt 7 ist im Querschnitt als rechtwinkliges Dreieck mit einem Gummikern 9 und einer den Gummikern 9 umgebenden schlaufenartigen Karkasse 11 gebildet. Die Karkasse 11 ist von dem Gummimaterial des Mittelbereichs umgeben.

Der Dichtungsabschnitt 7 hat eine den nicht dargestellten Leitungen zugewandte Dichtfläche 13, die sich im wesentlichen parallel zur Längsrichtung der in Fig. 1 nicht dargestellten, mit der erfindungsgemäßen Vorrichtung 1 zu verbindenden Leitung erstreckt. An einem dem Ende des Dichtungsabschnitts 7 distalen Bereich sind Dichtlippenvorsprünge 15 vorgesehen, die ein fluiddichtes Schließen einer Leitung auch dann gewährleisten, wenn keine auf das Verbindungsstück 3 wirkenden Innendruckkräfte mitbewirken.

Der Dichtungsabschnitt hat eine zur Dichtfläche 13 geneigte, radial außen liegende Anlagefläche 17, die in einem ca. 36°-Winkel α zur Dichtfläche 13 geneigt ist.

Die erfindungsgemäße Vorrichtung 1 umfasst als weiteren Hauptbestandteil eine Befestigungsschelle 21, die aus zwei Halbschalen besteht, die über Flanschbereiche 23 mittels einer Schrauben (25)-Mutter (27)-Verbindung aneinander befestigbar sind. Die Befestigungsschelle 21 umfasst eine Montagefläche 29, die mit einem Rillenprofil versehen ist, um einen kraftschlüssigen Schluss mit der nicht dargestellten Leitung herzustellen. Die Rohrschelle 21 umfasst eine nach radial innen weisende, den Dichtungsabschnitt 7 aufnehmende Ausnehmung 31, die beidseitig durch radiale Flanken 33, 34 seitlich begrenzt ist.

Die Ausnehmung 31 ist derart dimensioniert, dass der Dichtungsabschnitt 7 im montierten Zustand der Schelle 21 an den Leitungen lose gehalten wird, d.h. beweglich zumindest in einer Längsrichtung der Leitung.

Zwischen dem flankenseitigen (33) Bereich der Ausnehmung 31 und der Anlagefläche 17 des Dichtungsabschnitts 7 ist ein Führungsring 35 angeordnet, der eine der Anlagefläche 17 zugeordnete, formkomplementäre Seite aufweist. Auch der Führungsring 35 liegt im montierten Zustand der Schelle 21 lose in der Ausnehmung 31.

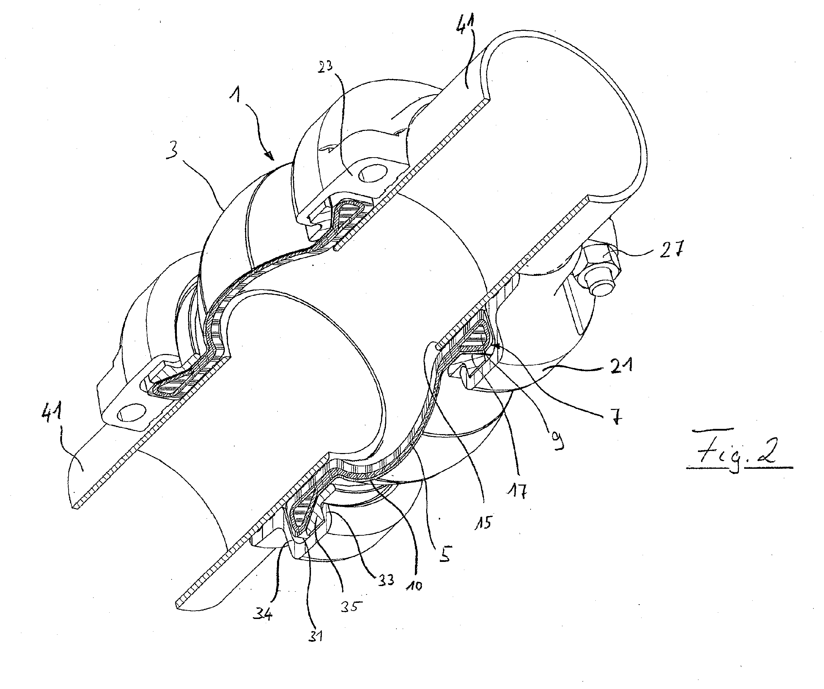

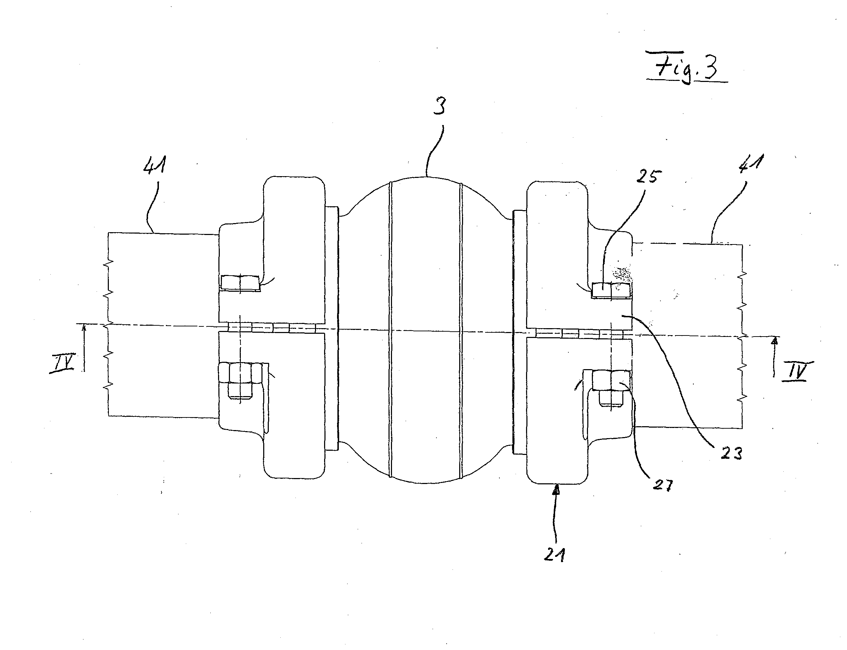

In den Figuren 2 bis 4 wird nun die erfindungsgemäße Vorrichtung 1 in montiertem Zustand an Rohrleitungen 41 dargestellt.

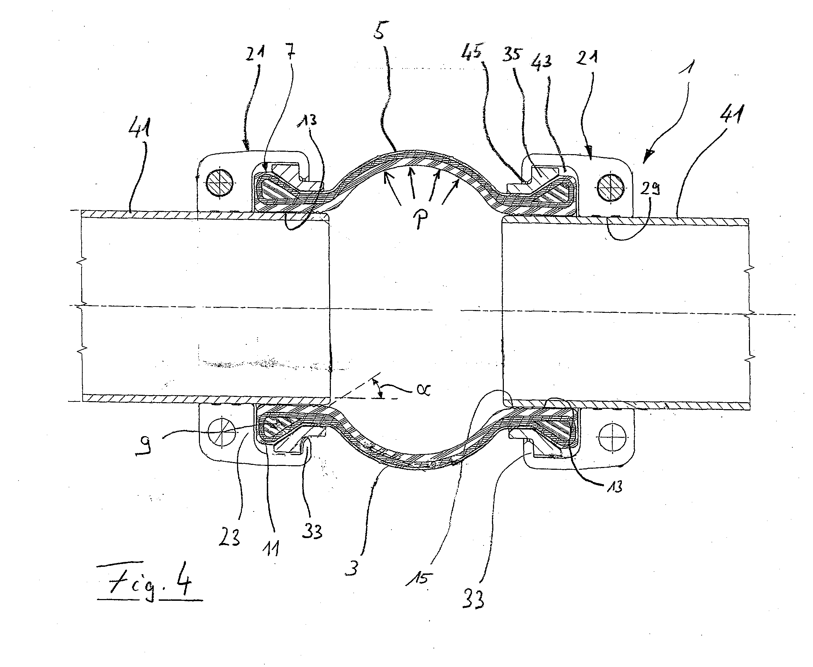

Wie insbesondere in Figur 4 ersichtlich ist, begrenzen die Leitungen 41 und die jeweilige Schelle 21 einen Aufnahmeraum 43, der auf der zur gegenüberliegenden Schelle weisenden Seite hin offen ist und einen umlaufenden Durchgang 45 bildet, durch den hindurch sich das flexible Verbindungsstück 3 erstreckt. Die Flanke 33 bildet eine radial nach innen weisende Einschnürung, die ein axiales Herausgleiten des Führungsrings 35 verhindert. Der Durchgang 45 ist derart groß bemessen, dass ein Herausgleiten des Dichtungsabschnitts 7 durch den Durchgang 45 nicht ohne Zerstörung des Dichtungsabschnitts 7 realisierbar ist.

Der Führungsring 35 hat die Aufgabe, einerseits den Durchgang 45 auf ein Maß zu begrenzen, das etwas kleiner als die Dicke des Mittelbereichs des flexiblen Verbindungsstücks 3 ist, andererseits Zugkräfte, die sich bei Aufbau eines auf die Innenfläche des flexiblen Verbindungsstücks 3 wirkenden Innendrucks entstehen, in radiale Normalkräfte umzulenken, die über die Dichtfläche 13 in die Leitung 41 eingeleitet werden. Der Innendruck p veranlasst die Dichtungsabschnitte 7 sich aufeinanderzu zu bewegen, wobei die Anlagefläche auf die zugewandte Seitenfläche des Führungsrings 35 drückt, der wiederum an der Flanke 33 gehalten wird. Über die Anlagefläche 17 werden die Zugkräfte radial umgelenkt. Die Verstärkung 11 verhindert ein Durchrutsehen des Dichtungsabschnitts 7 durch den Durchgang 45 hindurch.

Um die Schellen 21 an die Leitung 41 zu befestigen, werden sämtliche durch die Schraubenmutterverbindung hervorgerufenen Spannkräfte direkt über die Montagefläche 29 in die Leitung 41 eingeleitet. Dabei wird keine Montagekraft auf den Führungsring 35 oder den Dichtungsabschnitt 7 ausgeübt.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Vorrichtung zum fluiddichten Verbinden zweier fluidführender Leitungen
- 3: flexibles Verbindungsstück
- 5: Karkasse
- 7: Dichtungsabschnitt oder -körper
- 9: Gummikern
- 10: Mantel
- 11: schlaufenartiger Karkassenabschnitt
- 13: Dichtfläche
- 15: Dichtlippe
- 17: Anlagefläche
- 21: Befestigungsschelle
- 23: Flansch
- 29: Montagefläche
- 31: Aussparung
- 33, 34: Flanke
- 35: Führungsring
- 41: Rohrleitung
- 43: Aufnahmeraum
- 45: Durchgang
- p: Innendruck
- α: Winkel

## Patentansprüche

1. Vorrichtung zum fluiddichten Verbinden zweier fluidführender Leitungen, umfassend ein flexibles Verbindungsstück (3) mit wenigstens einem insbesondere bei einem auf das Verbindungsstück wirkenden Fluidbetriebsdruck gegenüber einer der Leitungen selbstdichtenden Dichtungsabschnitt (7), **gekennzeichnet durch** wenigstens eine Halteeinrichtung, die an einer der Lei-tungen fest montierbar ist und zumindest im montierten, fluidbetriebsdruckfreien Zustand den Dichtungsabschnitt (7) lose oder beweglich an der einen Leitung hält.

2. Vorrichtung nach Anspruch 1, **dadurch gekennzeichnet , dass** die montierte Halteeinrichtung den Dichtungsabschnitt in einer Vorzugsrichtung beweglich hält, die im wesentlichen parallel zur Längserstreckung der einen Leitung ist.

3. Vorrichtung nach Anspruch 1 oder 2, **dadurch gekennzeichnet , dass** der Dichtungsabschnitt (7) eine Dichtfläche (13) und eine gegenüber der Dichtfläche (13) geneigte Anlagefläche (17) aufweist, die insbesondere mit einem Anschlag der Halteeinrichtung oder der einen Leitung derart zusammenwirkt, dass auf den Dichtungsabschnitt (7) wirkende Zugkräfte zumindest teilweise in auf die Dichtfläche (10) wirkende Normalkräfte umgelenkt werden.

4. Vorrichtung nach Anspruch 3, **dadurch gekennzeichnet , dass** ein Winkel α zwischen Anlagefläche und Dichtfläche in einem Bereich von 10° bis 60°, vorzugsweise zwischen 15° bis 45° liegt, insbesondere bei 36° liegt.

5. Vorrichtung nach einem der Ansprüche 1 bis 4, **dadurch gekennzeichnet , dass** zwischen dem Dichtungsabschnitt (7) und einem durch die Halteeinrichtung gebildeten Anschlag ein den Dichtungsabschnitt (7) geschlossen umgebendes Zwischenringteil angeordnet ist.

6. Vorrichtung nach Anspruch 5, **dadurch gekennzeichnet , dass** das Zwischenringteil eine zur Anlagefläche (17) formkomplementäre Seite aufweist.

7. Vorrichtung nach Anspruch 5 oder 6, **dadurch gekennzeichnet , dass** das Zwischenteil ringförmig ist.

8. Vorrichtung nach einem der Ansprüche 5 bis 7, **dadurch gekennzeichnet , dass** die montierte Halteeinrichtung das Zwischenringteil lose oder beweglich an dem Dichtungsabschnitt (7) hält.

9. Vorrichtung nach einem der Ansprüche 1 bis 8, **dadurch gekennzeichnet , dass** der Dichtungsabschnitt (7) keilförmig ist, insbesondere den Querschnitt eines rechtwinkligen Dreiecks aufweist.

10. Vorrichtung nach einem der Ansprüche 1 bis 9, **dadurch gekennzeichnet , dass** der Dichtungsabschnitt (7) einen Mehrschichtaufbau aufweist, der einen weichen Gummikern, eine den Gummikern (9) umgebende netzartige Verstärkung, insbesondere eine Karkasse (5), und einen die Verstärkung und den Gummikern (9) umgebenden elastischen Mantel (10) umfasst, der insbesondere zumindest an einer Dichtungsfläche weicher als der Gummikern (9) ist.
